# EUROPÄISCHE PATENTANMELDUNG

(11) **EP 2 689 926 A1**
(43) Veröffentlichungstag der Anmeldung: **29.01.2014**
(21) Anmeldenummer: 12178193.4
(22) Anmeldetag: 27.07.2012
(51) Int. Cl.: B32B 17/06, D06P 5/30

(54) **Flachglaskörper sowie Verfahren zur Herstellung desselben**

(71) Anmelder: Kissel & Wolf GmbH, 69168 Wiesloch (DE)
(72) Erfinder: Tinsel, Guy, 67460 Souffelweiherstheim (FR)
(74) Vertreter: Albrecht, Ralf

(57) **Zusammenfassung**

Die vorliegende Erfindung betrifft einen Flachglaskörper mit einem Flachglas, das zwei gegenüberliegende Flachseiten hat, von denen eine mit einer Beschichtung versehen ist, welche wenigstens eine Klebstoffschicht und eine durch sie auf der freien Seite gehaltenen Flockfaserschicht aus Flockfasern aufweist, wobei die Plockfaserschicht mit einer Druckfarbe versehen ist, deren Eindringtiefe von der freien Seite her so gering ist, dass die Druckfarbe von der anderen Flachseite nicht sichtbar ist. Des Weiteren betrifft die Erfindung ein Verfahren zu dessen Herstellung und die Verwendung eines Flachglaskörpers.

## Beschreibung

Die Erfindung betrifft einen Flachglaskörper mit einem Flachglas, das zwei gegenüberliegende Flachseiten hat, von denen eine mit einer Beschichtung versehen ist, welche wenigstens eine Klebstoffschicht und eine durch sie auf der freien Seite gehaltenen Flockfaserschicht aus Flockfasern aufweist. Sie betrifft des Weiteren ein Verfahren zur Herstellung eines solchen Flachglaskörpers sowie dessen Verwendung.

Im Stand der Technik ist es bekannt, Glas- oder Keramikoberflächen in Flach- oder Hohlform mit einer dekorativen Beschichtung zu versehen (DE 37 30 477 C2). Hierzu wird auf eine der beiden Flachseiten eine Klebstoffschicht aufgetragen. Vor deren Erstarren werden auf die Klebstoffschicht elektrostatisch Flockfasern insbesondere aus Kunststoff aufgebracht, die dann an der Außenseite des Flachglaskörpers eine an der Klebstoffschicht haftende Flockfaserschicht bilden. Hierdurch erhält der Flachglaskörper auf der mit der Flockfaserschicht versehenen Seite ein dekoratives Erscheinungsbild, wobei zusätzlich auch eine erhöhte Rutschsicherheit und eine verbesserte Schlagfestigkeit erreicht wird.

Daneben ist es bekannt, eine solche Beschichtung auf ebene Gegenstände aus undurchsichtigem Material wie Blech, Kunststoff, Pappe o. dgl. aufzubringen und die Flockfaserschicht mit einem Farbauftrag nach dem Siebdruckverfahren, Rasterdruckverfahren, Offsetdruckverfahren oder mittels Spritzpistole zu versehen, wobei zuvor auch noch ein Grundierlack aufgebracht sein kann (DE 27 08 842 A1). Ein solcher Farbauftrag führt zu einer vollständigen Durchtränkung der Flockfaserschicht. Würde man solche Druckverfahren bei der Einfärbung bzw. Bedruckung von Flockfaserschichten auf Flachglas verwenden, würde das Farbmuster von der anderen Flachseite des Flachglases sichtbar sein. Um dies zu vermeiden, müsste diese Flachseite zusätzlich mit einer blickdichten Beschichtung versehen werden.

Der Erfindung liegt die Aufgabe zugrunde, einen Flachglaskörper bereitzustellen, der eine von der Farbe der Flockfasern unabhängige Farbgestaltung hat, die gleichwohl von der anderen Flachseite her nicht erkennbar ist.

Diese Aufgabe wird erfindungsgemäß durch einen Flachglaskörper gelöst, bei dem die Flockfaserschicht mit einer Druckfarbe versehen ist, deren Eindringtiefe in die Flockfaserschicht von der freien Seite her so gering ist, dass die Druckfarbe von der anderen Flachseite her nicht sichtbar ist. Grundgedanke der Erfindung ist es also, die Farbgestaltung der Flockfaserschicht mittels Druckfarbenauftrag unabhängig von der Farbe der Flockfasern zu machen, wobei jedoch der Auftrag so eingeschränkt wird, dass sie nicht durch das Flachglas hindurchscheint, sie also von der anderen Flachseite her nicht erkennbar ist. Von Vorteil ist dabei, dass der beschränkte Auftrag von Druckfarbe Materialkosten einspart und dass zur Herstellung eines unifarbenen Erscheinungsbilds auf der der Flockfaserschicht abgewandten Flachseite keine blickdichte Beschichtung angeordnet werden braucht. Somit lassen sich Flachglaskörper herstellen, die auf der einen Flachseite in gewünschter Weise dekorativ gestaltet sind, auf der anderen Seite aber ein unifarbenes und damit ruhiges Erscheinungsbild haben. Solche Flachglaskörper eignen sich vor allem für Trennwände zur Abtrennung von Arbeitsbereichen in Großraumbüros und für Glastüren, aber auch zur Bildung von abgeschlossenen Zimmern.

Davon abgesehen zeichnet sich ein solcher Flachglaskörper auch durch bessere Wärme- und Schalldämmung sowie durch eine auf der Flockseite angenehme, weil warme Haptik aus.

Unter dem Begriff "Flachglaskörper" sind solche Körper zu verstehen, bei denen ein Flachglas den Träger für die Beschichtung bildet und die gegenüberliegenden Flachseiten eine vergleichsweise große Erstreckung gegenüber den Stirnseiten haben, wie dies beispielsweise bei Trennscheiben, Glastüren, Fensterscheiben oder dergleichen typischerweise der Fall ist. Darunter sollen auch solche Flachgläser fallen, die in Anpassung an bestimmte räumliche Verhältnisse gebogen sind.

Als Gläser kommen insbesondere für die üblicherweise für Glastüren, Trennwände oder Fensterscheiben verwendete Gläser in Frage. Sie können vollständig durchsichtig sein, aber auch eingefärbt oder strukturiert sein oder auch Milchglascharakter haben, also opak sein.

Grundsätzlich sollte die Eindringtiefe der Druckfarbe so gering sein, dass sie nicht bis zur Klebstoffschicht reicht, d. h. Abstand zu ihr hat. Je größer dieser Abstand ist, desto geringer die Gefahr, dass die Druckfarbe zur freien Flachseite des Flachglases durchscheint. Zweckmäßigerweise sollte die Eindringtiefe der Druckfarbe maximal 50% der Dicke der Flockfaserschicht, zweckmäßigerweise nur maximal 25% und vorzugsweise nur maximal 10% betragen, wobei letzterer Maximalwert insbesondere für Fälle empfehlenswert ist, bei denen das Flachglas klar ist, also nicht eingefärbt ist, und auch ansonsten nicht bearbeitet ist, beispielsweise nicht geätzt oder sandgestrahlt ist.

Für die Klebstoffschicht können die bei der Beflockung von Flächen üblicherweise verwendeten Klebstoffe auf Dispersions- oder UV-Basis verwendet werden, beispielsweise wie sie aus der DE 35 08 995 C2 oder der DE 102 08 027 B4 zu entnehmen sind. Aber auch andere Klebstoffe, die geeignet sind, einerseits auf Glas zu haften und andererseits elektrostatisch auf Flockfasern zu halten, können eingesetzt werden.

Die Klebstoffschicht ist vorzugsweise unifarben. Angesicht der geringen Dicke der Klebstoffschicht ist sie in der Regel durchscheinend bis nahezu durchsichtig, so dass das Erscheinungsbild auf der Flachseite ohne Beschichtung von der Farbe der Flockfasern beherrscht wird. Selbstverständlich steht es frei, den Klebstoff einzufärben und ihn hierdurch undurchsichtig, insbesondere opak zu machen. Mit Blick auf die nur beschränkte Eindringtiefe der Druckfarbe ist dies jedoch nicht erforderlich, es sei denn als höchst vorsorgliche Maßnahme.

Um auf der Flachseite ohne Beschichtung ein unifarbenes Erscheinungsbild zu erzeugen, sollten die Flockfasern gleiche Farbe haben. Dabei hat es sich bewährt, weiße Flockfasern zu verwenden, was jedoch nicht ausschließt, dass man für besondere Anwendungszwecke auch farbige Flockfasern einsetzt.

Besondere Effekte lassen sich durch eine räumliche Strukturierung zwischen Beschichtung und benachbarter Flachseite des Flachglases erzeugen. Dies kann in der Weise erfolgen, dass die mit der Beschichtung versehene Flachseite des Flachglases selbst räumlich strukturiert wird, beispielsweise durch Ätzen, Sandstrahlen oder andere mechanische Bearbeitung. Ein ähnlicher Effekt lässt sich dadurch erreichen, dass auf die Flachseite mit der Beschichtung eine Grundschicht aufgebracht wird, auf die die Beschichtung aufgetragen wird, wobei die Grundschicht eine räumliche Struktur auf der der Klebstoffschicht zugewandten Seite aufweist. Beide Maßnahmen dienen dazu, der Farbgestaltung eine räumliche Wirkung zu geben, die auch reliefartig sein kann. Dies kann noch dadurch verstärkt werden, dass der Druckfarbenauftrag in bestimmten Bereichen unterbrochen wird.

Die Länge der Flockfasern sollte in einem solchen Verhältnis zur Dicke der Klebstoffschicht stehen, dass die Flockfasern nach ihrem elektrostatischen Auftrag weitestgehend senkrecht von der freien Oberfläche der Klebstoffschicht abstehen, d. h. der von der Klebstoffschicht vorstehende Teil der Flockfasern sollte nicht zu lang sein. Bewährt hat sich eine Länge der Flockfasern, die etwa dem 10fachen der Dicke der Klebstoffschicht beträgt.

Die Flockfasern der Flockfaserschicht sollte eine Oberflächenbelegung von mindestens 10% der Fläche der Klebstoffschicht haben, vorzugsweise etwa 15%. Dies ist ausreichend, um eine optisch flächendeckende und gleichmäßige Flockfaserschicht mit warmer Haptik zu erzeugen und die Eindringtiefe der Druckfarbe entsprechend den Grundgedanken der vorliegenden Erfindung beschränkt zu halten. Die Druckfarbe ist zweckmäßigerweise in einer Menge von 20 bis 30 ml/m² aufgetragen.

Gegenstand der Erfindung ist des Weiteren ein Verfahren zur Herstellung eines vorgeschriebenen Flachglaskörpers. Erfindungsgemäß soll die Flockfaserschicht nach ihrer Herstellung mit einer Druckfarbe in eine Eindringtiefe versehen werden, die von der freien Seite her gesehen so gering ist, dass die Druckfarbe von der anderen Flachseite des Flachglases nicht sichtbar ist. Vorzugsweise soll die Eindringtiefe so beschränkt sein, dass die Druckfarbe Abstand zur Klebstoffschicht hat. Dieser sollte umso größer sein, je durchsichtiger das Flachglas und die Klebstoffschicht sind, insbesondere wenn die freie Flachseite keine die Durchsichtigkeit des Flachglases einschränkende Beschichtung aufweist.

Die Beschränkung des Druckfarbenauftrags gelingt besonders wirksam und einfach unter Verwendung der Tintenstrahldrucktechnik (Ink-Jet-Verfahren), da sie einen besonders feinen Druckfarbenauftrag ermöglicht und auch bei Großformatdruckern einsetzbar ist. Die Führung des Druckkopfs kann über eine digitale Steuerung in üblicher Weise erfolgen, wobei beliebige Druckfarbenmuster - auch sich in einem bestimmten Rapport wiederholend - verwirklicht werden können. Als Druckfarben kommen hierfür geeignete Lösungsmittelfarben, auf Wasser basierende Farben oder auf UV basierende Farben infrage.

Für die Beflockung können grundsätzlich sämtliche Flockfaserarten und -farben verwendet werden, wobei bevorzugt weiße Polyamidfasern eingesetzt werden (z.B. 0,5 mm Länge, 1,7 dtex), weil sich das Material Polyamid gut zum Bedrucken eignet. Für besondere Effekte können auch andere Flockfasersorten verwendet werden, beispielsweise von 0,3 bis 1 mm lange Fasern (0,6 bis 6,7 dtex) auf Basis von Viscose, Polyamid oder Polyester.

Es ist zweckmäßig, dass die Klebstoffschicht nach dem Auftrag der Flockfasern durch besondere Maßnahmen fixiert wird. Bei wasserbasierenden Klebstoffen sollte vorzugsweise nach einer Trocknung bei Temperaturen bis etwa 80°C eine Fixierung bei einer Temperatur oberhalb von 100°C, vorzugsweise bei 140°C, erfolgen. UV-Klebstoffe können mittels UV-Härtung fixiert werden, wobei diese Härtung auch unter Anwendung erhöhter Temperatur erfolgen kann.

Sofern eine Strukturierung der Flachseite des Flachglases, auf die die Beschichtung aufgetragen werden soll, gewünscht ist, kann hierfür ein UV-Klebstoff verwendet werden, der mit Hilfe von Druckverfahren, beispielsweise mittels Siebdruck, aufgebracht wird. Alternativ dazu oder in Kombination damit kann das Flachglas auch selbst auf dieser Flachseite strukturiert werden, beispielsweise durch Ätzen, Sandstrahlen oder andere mechanische Bearbeitung, z.B. Schleifen.

Es versteht sich, dass die Merkmale, die den Flachglaskörper selbst betreffen, auch Gegenstand des vorstehend beschriebenen Verfahrens sind, auch wenn entsprechende Ansprüche in Verfahrensformulierung nicht wiederholt wiedergegeben sind.

Im Übrigen ist Gegenstand der Erfindung auch die Verwendung des erfindungsgemäßen Flachglaskörpers als Bestandteil von Bauten, also Immobilien wie Häusern, Hallen, Kabinen oder dergleichen, insbesondere als Trennwand, Trennwandbestandteil oder als Glastür.

## Patentansprüche

1. Flachglaskörper mit einem Flachglas, das zwei gegenüberliegende Flachseiten hat, von denen eine mit einer Beschichtung versehen ist, welche wenigstens eine Klebstoffschicht und eine durch sie auf der freien Seite gehaltenen Flockfaserschicht aus Flockfasern aufweist, **dadurch gekennzeichnet, dass** die Flockfaserschicht mit einer Druckfarbe versehen ist, deren Eindringtiefe von der freien Seite her so gering ist, dass die Druckfarbe von der anderen Flachseite nicht sichtbar ist.

2. Flachglaskörper nach Anspruch 1, **dadurch gekennzeichnet, dass** die Eindringtiefe der Druckfarbe maximal 50 % der Dicke der Flockfaserschicht, zweckmäßigerweise nur maximal 25 % und vorzugsweise nur maximal 10 % beträgt.

3. Flachglaskörper nach Anspruch 1 und/oder 2, **dadurch gekennzeichnet, dass** die Klebstoffschicht unifarben und/oder undurchsichtig, insbesondere opak ist.

4. Flachglaskörper nach einem der Ansprüche 1 bis 3, **dadurch gekennzeichnet, dass** die Flockfasern gleiche Farbe haben, insbesondere weiß sind.

5. Flachglaskörper nach einem der Ansprüche 1 bis 4, **dadurch gekennzeichnet, dass** die mit der Beschichtung versehene Flachseite räumlich strukturiert ist.

6. Flachglaskörper nach einem der Ansprüche 1 bis 5, **dadurch gekennzeichnet, dass** auf die eine Flachseite eine Grundschicht aufgebracht ist, auf die die Beschichtung aufgetragen ist, wobei die Grundschicht eine räumliche Struktur auf der der Klebstoffschicht zugewandten Seite aufweist.

7. Flachglaskörper nach einem der Ansprüche 1 bis 6, **dadurch gekennzeichnet, dass** die Flockfasern der Flockfaserschicht eine Oberflächenbelegung von mindestens 10 % der Fläche der Klebstoffschicht haben, vorzugsweise etwa 15 %.

8. Flachglaskörper nach einem der Ansprüche 1 bis 7, **dadurch gekennzeichnet, dass** die Druckfarbe in einer Menge von 20 bis 30 ml/m² aufgetragen ist.

9. Verfahren zur Herstellung eines Flachglaskörpers nach einem der Ansprüche 1 bis 8, bei dem eine Flachseite eines Flachglases mit einer Beschichtung versehen wird, indem zunächst flachglasseitig eine Klebstoffschicht aufgetragen und vor dem Erstarren Flockfasern auf die Klebstoffschicht unter Bildung einer Flockfaserschicht aufgebracht und hierdurch an ihr befestigt werden, **dadurch gekennzeichnet, dass** die Flockfaserschicht mit einer Druckfarbe in einer Eindringtiefe versehen wird, die von der freien Seite her gesehen so gering ist, dass die Druckfarbe von der anderen Flachseite nicht sichtbar ist.

10. Verfahren nach Anspruch 9, **dadurch gekennzeichnet, dass** die Druckfarbe in Tintenstrahldrucktechnik aufgebracht wird.

11. Verfahren nach Anspruch 9 oder 10, **dadurch gekennzeichnet, dass** die Flockfasern elektrostatisch aufgebracht werden.

12. Verfahren nach einem der Ansprüche 9 bis 11, **dadurch gekennzeichnet, dass** die Klebstoffschicht nach dem Auftrag der Flockfasern fixiert wird, und zwar bei wasserbasierenden Klebstoffen bei einer Temperatur oberhalb von 100°C und bei UV-Klebstoffen mittels UV-Härtung, wobei im letzteren Fall auch zusätzlich eine Temperaturhärtung erfolgen kann.

13. Verfahren nach einem der Ansprüche 9 bis 12, **dadurch gekennzeichnet, dass** das Flachglas auf der Flachseite, auf der die Beschichtung angeordnet wird, vor deren Auftrag räumlich strukturiert, insbesondere durch Ätzen oder Sandstrahlen, und/oder dass auf diese Flachseite eine Grundschicht, insbesondere aus einem UV-Klebstoff, in der Weise aufgebracht wird, dass die Grundschicht auf ihrer freien Seite eine räumliche Struktur erhält, und dann auf diese Grundschicht die Klebstoffschicht aufgetragen wird.

14. Verwendung des Flachglaskörpers nach einem der Ansprüche 1 bis 8 als Trennwand, Trennwandbestandteil oder als Glastür in Bauten.
